(19) Europäisches Patentamt / European Patent Office / Office européen des brevets

(11) **EP 4 177 317 B1**

(12) **EUROPEAN PATENT SPECIFICATION**

(45) Date of publication and mention
of the grant of the patent:
**24.07.2024   Bulletin 2024/30**

(21) Application number: **21206664.1**

(22) Date of filing: **05.11.2021**

(51) International Patent Classification (IPC):
**C09D 5/00** *(2006.01)*      **C09D 5/16** *(2006.01)*

(52) Cooperative Patent Classification (CPC):
**C09D 5/00; C09D 5/02; C09D 5/16**

(54) **USE OF A CORROSION INHIBITION COMPOSITION AND METHOD FOR INHIBITION OF CORROSION OF METALS OR METAL ALLOYS**

VERWENDUNG EINER KORROSIONSHEMMUNGSZUSAMMENSETZUNG UND VERFAHREN ZUR HEMMUNG DER KORROSION VON METALLEN ODER METALLLEGIERUNGEN

UTILISATION D'UNE COMPOSITION D'INHIBITION DE LA CORROSION ET PROCÉDÉ D'INHIBITION DE LA CORROSION DE MÉTAUX OU D'ALLIAGES MÉTALLIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.05.2023   Bulletin 2023/19**

(73) Proprietors:
• **AloxX GmbH**
  **8002 Zürich (CH)**
• **Otto-von-Guericke-Universität Magdeburg**
  **39106 Magdeburg (DE)**

(72) Inventors:
• **ZWINSELMAN, Jan Johan**
  **8002 Zurich (CH)**
• **HEYN, Andreas**
  **39106 Magdeburg (DE)**

(74) Representative: **Kailuweit & Uhlemann Patentanwälte Partnerschaft mbB Bamberger Straße 49 01187 Dresden (DE)**

(56) References cited:
**WO-A1-2009/027857      WO-A1-97/16521 JP-A- 2009 256 735**

EP 4 177 317 B1

**Description**

The present invention relates to the use of at least one malate as flash corrosion inhibitors comprising biodegradable and environmentally friendly chemicals for the concurrent protection of a variety of metals and/or metallic surfaces.

Flash corrosion is the general and rapid corrosion that instantly occurs, when metals or metal containing surfaces are exposed to corrosive environments. An example for this kind of corrosion is the phenomenon associated with the rusting of a wet cast-iron pan that is left to dry by air.

Flash corrosion is also known as flash rusting or flashing. It occurs quickly, especially when thin water films reside on the metallic surface, triggering the corrosive action.

Several protective measures are being applied to metal surfaces to avoid corrosion of the untreated surface.

The most common way to protect metal surfaces, especially ferrous metal surfaces, is the use of oily films. They are applied to the metal surface after the manufacture process and have to be removed before the metal item will undergo further modifications or before the coating or painting of the metal surface.

Another way to protect metal surfaces from corrosion is to apply a polymeric film on the metal surface.

Disadvantageously, the polymeric films have to be removed before the next processing steps. This cleaning process requires specialized tools and leads to high amounts of waste that have to be disposed accordingly. Especially the process of removing a polymeric film is cost and energy consuming, since it requires several times of spraying water under very high pressure on the metal surface to remove the film.

Additionally, after removing the protecting film and before the next processing step of the metal surface, a temporary gap arises. During this gap, flash rust also occurs quickly. Even after the application of paintings, flash corrosion occurs at the early stages of paint application and drying in water-based coatings. Most of the time, the corrosion products are soluble and capable of migrating within the coating and result in stains or spots. Therefore, flash rust inhibitors are often added to water-based coatings to suppress corrosion during the drying process.

Several additives for paintings or coatings have been developed to prevent flash corrosion from taking place during the drying stage. Such inhibitors are for example applied to the paint to prevent oxidation that is responsible for rusting.

These additive chemicals can insulate the coating electrically or making the coating impermeable to suppress electrochemical reactions. Therefore, the use of these chemicals can be very helpful, especially in water-borne systems as they can effectively prevent flash rust and offer rust protection.

Phosphate salts and phosphonoxy ethers are known additives to paintings to avoid flash corrosion during the drying stage of the paintings. They act as a water-soluble corrosion inhibitor for ferrous and zinc rich substrates, since they offer very good solubility in water-based systems. These compounds provide very good salt spray results in primers and inhibit metal weight loss. They also act as very good passivators for copper and copper alloys.

EP 0 544 345 A1 discloses a corrosion inhibition composition comprising hydroxyphosphinocarboxylic acids and a phosphonocarboxylic acid. When these compounds are used in conjunction with a conventional corrosion and/or scale inhibitor, any chlorinesensitivity of the conventional corrosion and/or scale inhibitor is greatly reduced.

US 2008/0257202 A1 discloses a rust-removing/preventing agent, comprising orthophosphoric acid, DL-malic acid, and a water, in which in the case that the total weight of the agent is assumed to be 1 kg, the weight of orthophosphoric acid is from 50 to 600 g, the weight of DL-malic acid is from 0.2 to 20 g, and the balance comprises the water. The rust is completely removed, only by immersing a rusted metallic product into (a single liquid of) the rust removing/preventing agent or painting the agent only on the rust on the surface thereof. By drying the metallic product taken out from the liquid of the agent or wiping off the liquid without subjecting the rust-removed metal to any post-treatment such as washing, the effect of preventing rust is exhibited indoors and outdoors over a long term. Furthermore, the agent has two functions of rust-removal and rust-prevention.

Amines are also known additives to inhibit flash corrosion.

US 7 306 663 B2 discloses a liquid corrosion inhibitor comprising a primary, secondary, tertiary or mixed amine complexing agent and a carboxylic acid complexing agent. Furthermore, it may contain a pH-adjusting agent and an antifreeze agent. The corrosion inhibitor is capable of providing both short-term and long-term corrosion protection on ferrous and non-ferrous metal substrates and protection from flash rusting.

US 2015/0053111 A1 discloses a corrosion inhibiting component that comprises a first complexing agent comprising a trialkanol amine and a second complexing agent comprising a carboxylic acid as corrosion inhibitors for coating compositions. The invention provides for coating compositions that have improved corrosion properties, including reduced flash rust during the application of the coating composition to a metal surface, and even improved corrosion inhibition in the resulting dried coating.

Furthermore, carboxylic acids are known inhibitors of corrosion.

In US 2004/0159823 A1 compositions and methods are disclosed for preventing the oxidative corrosion of metal surfaces by exposing a metal surface to an anti-corrosion agent. This agent is characterized as a lower alkyl carboxylic acid or salts and/or other derivatives. The anti-corrosion agent may be used in combination with a material capable of forming a moisture retentive barrier over the metal surface, e.g. phosphoric acid.

US 2 173 689 A and CA 398 718 A disclose a liquid composition having non-corrosive and anti-freeze properties particularly suitable for use as a coolant in internal combustion engines, comprising an alcohol and an inhibitor consisting essentially of a soluble nitrite salt and an alkali metal salt of an acid selected from the group consisting of maleic, crotonic, cinnamic and furylacrylic acids. US 2 173 689 A describes the advantageous effect for all metals of the usual cooling system, including iron, copper, brass, solder and aluminium.

CN 109 065 912 A describes a refrigerant, comprising 10-12 parts of a non-ionic corrosion inhibitor and 10-15 parts (6-11%) of an alkali metal or alkaline earth metal salt, wherein the alkali metal or alkaline earth metal salt preferably consists of the alkali metal lithium, sodium, potassium or alkaline earth metal magnesium, calcium, strontium and one or more of the salts formed by acetic acid, propionic acid, succinic acid, lauric acid and maleic acid. The non-ionic corrosion inhibitor is produced from p-hydroxybenzaldehyde and lignin by a three-step process.

CN 108 425 123 A describes an anti-rust cleaning agent for aluminium and aluminium alloys containing 3-7 parts of alkaline builder, 0.1-2 parts of organic carboxylic acid, 0.1-1 part of ternary poly-carboxylate, 0.1-2 parts of a complex low foaming surfactant, 0.5-2 parts of a complexing agent (0.6-1.9%), 0.1-3 parts of a corrosion inhibitor (0.1-2.8%) and 85-90 parts (84.1-95.6%) of water. In embodiments, the corrosion inhibitor is an organic corrosion inhibitor, preferably selected from diethanolamine, triethanolamine, benzotriazole, glucose, sucrose, dextrin powder, nectar, an alcohol, sodium benzoate, alkylimidazoline, hydrazine hydrate, thiourea, 2-mercaptobenzothiazole, 2-mercaptobenzothiazole, 2-hydroxybenzothiazole and/or 2-methylbenzothiazole, or an inorganic corrosion inhibitor preferably selected from trisodium phosphate, sodium tripolyphosphate, sodium hexametaphosphate, sodium molybdate, sodium nitrate, sodium nitrite, sodium tetraborate, sodium tungstate and/or sodium thiocyanate.

JP 2004 196901 A discloses a surfactant composition for dipping and cleaning a material such as utensils or cookware, comprising at least one acid selected from a monocarboxylic acid, a dicarboxylic acid, a polycarboxylic acid and water-soluble salts thereof, and at least one sulfate or chloride. JP 2004 196901 A describes a metal corrosion inhibitor as an additional component.

JP 2009 256735 A describes a liquid composition which is a combined aluminum corrosion inhibitor and magnesium corrosion inhibitor of a melting point depressant selected from a group consisting of glycols and alcohols, and is characterized by including (a) one or more kinds of corrosion inhibitors selected from fluorides, (b) one or more corrosion inhibitors selected from alkaline earth metal compounds, and (c) an ion sealing agent, and does not contain a silicon compound. Preferably, the alkaline earth metal compound is at least one selected from a calcium compound, a magnesium compound, and a strontium compound.

WO 2009/027857 A1 discloses shelf stable and/or less corrosive peroxycarboxylic acid antimicrobial compositions, including defined ratios of hydrogen peroxide to peroxycarboxylic acid and/or hydrogen peroxide to protonated carboxylic acid. WO 2009/027857 A1 discloses malate salts, in particular sodium malate, as a possible buffer, and optionally describes the addition of a corrosion inhibitor, especially mentioning triazole corrosion inhibitor.

WO 97/16521 A1 describes bleach catalyst-containing composite particles suitable for incorporation into granular detergent compositions, said composite particles comprising: (a) from about 1 % to about 60 % of bleach catalyst (preferably a cobalt catalyst); and (b) from about 40 % to about 99 % of carrier material that melts within the range of from about 38 °C to about 77 °C (preferably selected from the group consisting of polyethylene glycols, paraffin waxes, and mixtures thereof). WO 97/16521 A1 discloses malate as a stabilizing agent, increasing the effect of fat dissolving agents or "scavenger" (binding of e.g., oxygen to prevent undesired reactions) and suitable corrosion inhibitors as including paraffin oil, benzotriazole, and its derivatives.

Disadvantageously, conventional corrosion inhibitors are often based on more or less toxic chemicals, typically hazardous compounds (e.g. triazoles or reactive amines) exhibiting an enormous problem in safety and environmentally friendly application which leads to an increased demand for biodegradable, non-toxic and generally recognized as safe (GRAS) chemicals as novel corrosion inhibitors.

In order to replace these hazardous compounds a certain number of corrosion inhibitors have been published in the past years, yet often complex mixtures of different inhibiting compounds have been proposed. Most common are mixtures of silicates, phosphates, gluconates and molybdates.

Therefore, it is an object of the invention to provide environmentally friendly compounds as effective flash corrosion inhibitors that could be used in protective films as well as in paintings or coatings.

An additional benefit could be achieved by providing additives, that make it unnecessary to remove the protective film on metal surfaces before the next processing steps e.g. applying paintings or modifying the metal surface, to avoid high amounts of waste and to overcome the temporary gap, in which flash corrosion might occur.

Therefore, it is also an object of the invention to provide a flash corrosion inhibitor for the formation of a temporary protective film and/or a protective coating film on the metal surface that does not require to be removed before the subsequent application of paintings or similar modification of the surface.

The film shall not interfere with the painting or subsequent coating and shall not lead to adhesion problems of the subsequent coating.

The object has been solved by the use se of at least one malate, wherein the cation of the malate is selected from the group comprising Li, Na, K, Cs, Fr, Rb, Ca and Mg as a corrosion inhibition composition.

The environmentally friendly flash corrosion inhibition composition consisting of

- at least one malate,

wherein the cation of the malate is selected from the group comprising Li, Na, K, Cs, Fr, Rb, Ca and Mg, is used for inhibition of corrosion of metals and/or metal containing surfaces.

Surprisingly, exposition of metals and/or metal surfaces to smallest amounts of the composition provides for a high protection from flash corrosion.

According to the invention, the corrosion inhibition composition does not comprise environmentally hazardous or toxic compounds, in particular nitrites.

According to the invention, a malate is a salt of a malic acid. Malic acid is a dicarboxylic acid, which is an organic chemical compound comprising two carboxylic moieties (-COOH).

Additionally, malic acid is an alpha-hydroxycarboxylic acid, which is an organic chemical compound comprising a carboxylic moiety (-COOH) and a carbon adjacent to the carboxylic carbon, wherein the carbon adjacent to the carboxylic carbon, is substituted with a hydroxyl group.

Advantageously, malates are non-hazardous chemical compounds, which are even used as a food additive.

Advantageously the corrosion inhibition composition can be used for example in food production or for sustainable and ecologically friendly industry processes.

Within malates, the proton of the -COOH of a malic acid group is substituted by a cation. According to the invention, the cation of the malate is selected from the group comprising Li, Na, K, Cs, Fr, Rb, Ca, Mg and mixtures thereof.

In embodiments, the cations can be a mixture of at least two of the named cations.

Preferably, the cation of the salt is Na or K.

A corrosion inhibition composition according to the invention effectively prevents metals and/or metal containing surfaces, susceptible to oxidative corrosion, from corrosion or flash corrosion.

As used herein, the term "metal containing surface" refers to a surface of a metal, a surface with a metal coating or a surface comprising at least partly a metal coating.

As used herein, the term "metal" also includes metal alloys.

In certain embodiments, the metal and/or metal containing surface is a ferrous metal.

In certain embodiments, the ferrous metal is selected from the group comprising steel, stainless steel, carbon steel, cast iron, iron, alloy steel and mixtures thereof.

Especially cast iron has a high sensitivity for flash corrosion and numerous additives have been studied to prevent this disturbing effect on the cast iron surfaces.

Surprisingly, a composition according to the invention effectively prevents ferrous metal surfaces from flash corrosion.

In certain embodiments, the metal and/or metal containing surface is selected from the group comprising magnesium, cast magnesium, aluminum, cast aluminum, cast iron, copper, zinc, brass and mixtures thereof.

In embodiments, the corrosion inhibition composition is used in coatings, preferably in paintings or functional coatings. As used herein, the term "functional coating" refers to a coating, which protects the metal and/or metal containing surface, in particular against solvents, like water, UV, corrosion, fire, painting, microbial fouling; or changes the surface properties of the metal and/or metal containing surface, in particular adhesive properties, magnetic properties, electrical properties, scent properties, catalytic properties and/or optical properties.

Another object of the invention is a method for inhibition of corrosion of metals and/or metal containing surfaces, comprising the steps

    a) Providing

        i) a corrosion inhibition composition consisting of at least one malate, wherein the cation of the malate is selected from the group comprising Li, Na, K, Cs, Fr, Rb, Ca and Mg, and/or
        ii) a liquid corrosion inhibition formulation consisting of a corrosion inhibition composition according to a1), and at least one liquid medium, selected from water, at least one organic solvent or a mixture thereof, and/or
        iii) a solid corrosion inhibition formulation consisting of a corrosion inhibition composition according to a1), and at least one solid component, wherein the at least one solid component is selected from carrier materials, complexing agents, softeners and surfactants

    b) Exposing a metal and/or metal containing surface

to the liquid corrosion inhibition formulation or

to a corrosion inhibition solution, wherein the corrosion inhibition solution is produced by addition of the corrosion inhibition composition and / or a liquid and/or a solid corrosion inhibition formulation to a solvent.

In embodiments the solvent of the corrosion inhibition solution is water, at least one organic solvent or a mixture thereof.

According to the invention, the method is carried out in the order of the steps a) and b).

According to the invention, the cation of the malate is selected from the group comprising Li, Na, K, Cs, Fr, Rb, Ca, Mg and mixtures thereof.

In preferred embodiments, the cation of the malate is selected from Na and/or K, more preferably the cation of the salt is Na or K

In embodiments, in step b) of the method for inhibition of corrosion, the corrosion inhibition composition is added to a solvent.

As used herein, the term "solvent" refers to an organic or inorganic liquid, which is able to physically dissolve a solid or another liquid substance, the requirement for suitability as a solvent is that neither the solvent nor the dissolved substance is chemically altered during the solution process.

In certain embodiments, the solvent is an aqueous medium.

In embodiments, the solvent comprises a water-soluble organic and/or inorganic solvent.

Preferably, water-soluble organic and/or inorganic solvents are selected from the group comprising alcohols, preferably methanol or ethanol; glycol ethers and glycols.

In preferred embodiments, the solvent is water, at least one organic solvent or a mixture thereof.

In further embodiments, the solvent comprises water and an organic and/or inorganic solvent and at least one surface tension modifying additive selected from emulsifiers, surfactants and/or detergents. In embodiments, the solvent is a water/oil emulsion or an oil/water emulsion.

In more preferred embodiments, the solvent is water.

Surprisingly, a highly efficient protection of the metal and/or metal containing surfaces from flash corrosion is given at very low concentrations of the corrosion inhibition composition within the solution.

In certain embodiments, the corrosion inhibition solution has a concentration of the corrosion inhibition composition in the range of 0.01% to 60% (w/w) of the total corrosion inhibition solution, preferably in the range of 0.05% to 15% of the total corrosion inhibition solution, most preferably in the range of 0.1 to 5% of the total corrosion inhibition solution.

Advantageously, efficient protection of the metal and/or metal containing surface is given after only short-term exposure of the surface to the corrosion inhibition composition or corrosion inhibition solution. The protection is given as soon as the water has been evaporated and an ultra-thin layer is left as a cover over the metal surface. In terms of the invention, an ultra-thin layer is a layer with a thickness below 100 μm, preferably below 1 μm.

In certain embodiments, the exposure in step b) is selected from dipping the metal and/or metal containing surface into the corrosion inhibition solution and/or spraying the corrosion inhibition solution on the metal and/or metal containing surface.

In certain embodiments, the metal and/or metal containing surface is dipped into the corrosion inhibition solution for 0.1 s to 300 s, preferably 1 s to 60 s, more preferably for 5 s to 30 s.

In certain embodiments, the exposure of the metal and/or metal containing surface to the corrosion inhibition solution is executed at temperatures in the range of 0 °C to 100 °C, preferably in the range of 10 °C to 40 °C.

Advantageously, a protective film is formed on the metal and/or metal containing surface that is not visible and that does not change the material properties, since only a thin layer is left as a cover of the metal surface.

In certain embodiments, the method according to the invention further comprises the step

c) Drying the metal and/or metal containing surface.

After exposure of the metal and/or metal containing surface to the corrosion inhibition solution, preferably dipping the metal and/or metal containing surface into the corrosion inhibition solution and/or spraying the corrosion inhibition solution on the metal and/or metal containing surface; the metal and/or metal containing surface is preferably dried before further processing steps. Drying methods are known from the art, e.g. drying in air, air dry blowing or vacuum technologies.

In further embodiments, no drying is required, e.g. in case the further processing step is the application of an aqueous painting system or another film protection (for example latex).

The resulting protective film formed on the metal and/or metal containing surface provides an efficient protection from flash corrosion to the metal.

Methods for the determination of the efficiency of the protection are known to the person skilled in the art. For example, the efficiency of the protection can be determined visually or by electrochemical measurements.

The visual determination of the efficiency is for example carried out using filter paper soaked with a corrosion inhibition solution on a metal and/or metal containing surface.

According to DIN EN ISO 10289, the efficiency of protection can be classified into protection and appearance ratings. Advantageously, the corrosion inhibition composition according to the invention is rated with a protection rating of at least 8 of 10.

The electrochemical measurement of the efficiency is for example carried out using a gel electrolyte and running an electrochemical impedance spectroscopy (EIS). The inhibitor efficiencies (protection rates) can be calculated from the polarization resistances.

Advantageously, the film does not necessarily need to be removed before the metal containing surface is further processed.

Moreover advantageously, the protection film on the metal and/or metal containing surface comprising the corrosion inhibition composition acts as adhesion promoter for further applied layers.

Another object of the invention is the use of a corrosion inhibition formulation consisting of

- at least one malate, wherein the cation of the malate is selected from the group comprising Li, Na, K, Cs, Fr, Rb, Ca and Mg, and
- at least one liquid medium for obtaining a liquid formulation, selected from water, at least one organic solvent or a mixture thereof, for inhibition of corrosion of metals and/or metal containing surfaces or
- at least one solid component, for obtaining a solid formulation, wherein the at least one solid component is selected from carrier materials, complexing agents, softeners and surfactants,

for the inhibition of corrosion of metals and/or metal containing surfaces.

In one embodiment the corrosion inhibition composition is consisting of at least one malate, wherein the cation of the malate is selected from the group comprising Li, Na, K, Cs, Fr, Rb, Ca and Mg, for inhibition of corrosion of metals and/or metal containing surfaces.

According to the invention, the liquid formulation is consisting of the corrosion inhibition composition and a liquid medium, selected from water, at least one organic solvent or a mixture thereof.

According to the invention, the liquid formulation does not comprise environmentally hazardous or toxic compounds, in particular nitrites.

In certain embodiments, the concentration of the corrosion inhibition composition in the liquid formulation is in the range of 0.01% to 60% (w/w) of the total liquid formulation, preferably in the range of 0.1% to 50% (w/w), more preferred in the range of 0.5% to 25% (w/w), mostly preferred in the range of 5% to 25% (w/w) of the total liquid formulation.

In embodiments, the liquid medium comprises water and at least one water-soluble organic solvent.

In further embodiments, the liquid medium comprises water and at least one organic solvent and at least one surface tension modifying additive such as emulsifiers, surfactants and/or detergents.

Advantageously, the liquid formulation can be applied to a wide range of metal containing surfaces at different temperatures and different concentrations.

In embodiments the liquid formulation is applied to the metal surface by spraying, dipping, and/or brushing.

In embodiments, the liquid formulation is used in coatings, preferably in paintings or functional coatings.

Another object of the invention is the use of a solid formulation consisting of a corrosion inhibition composition consisting of at least one malate, wherein the cation of the malate is selected from the group comprising Li, Na, K, Cs, Fr, Rb, Ca and Mg, and at least one solid component selected from carrier materials, complexing agents, softener and surfactants.

According to the invention, the solid formulation is consisting of the corrosion inhibition composition and and at least one further component selected from carrier materials, complexing agents, softener and surfactants.

According to the invention, the solid formulation does not comprise environmentally hazardous or toxic compounds, in particular nitrites.

In certain embodiments, the solid formulation is selected from powder, suspension, grouted powder, and particles.

In embodiments, the concentration of the corrosion inhibition composition in the solid formulation is in the range 0.05% to 99,9 % (w/w) of the total solid formulation, preferably 0.1% to 99,5% (w/w), more preferred in the range of 0.5% to 99% (w/w) of the total solid formulation.

In embodiments, the corrosion inhibition composition is used in coatings, preferably in paintings or functional coatings.

In embodiments, the solid formulation is used in coatings, preferably in paintings or functional coatings.

In embodiments, the corrosion inhibition composition, the liquid and/or the solid formulation are used for protection of metals and/or metallic surfaces from corrosion in liquids containing water, e.g. in an aqueous medium.

In embodiments, the corrosion inhibition composition, the liquid and/or the solid formulation according to the invention for protection of metals and/or metallic surfaces from flash corrosion. In embodiments, the corrosion inhibition composition, the liquid and/or the solid formulation is used for temporary corrosion protection of metal containing surfaces comprising cast iron, ferrous materials, copper, zinc, brass, aluminum, magnesium, combinations and alloys thereof.

In further embodiments, the corrosion inhibition composition, the liquid and/or the solid formulation is used as anti-corrosion additive in quenching agents, in base coatings for metal surfaces, in protective films such as latex or PMA films, copper drawing, metal forming, drawing or pressing, or in marine coatings and protection of metal surfaces during shipment.

In certain embodiments, the corrosion inhibition composition and/or the liquid and/or solid formulation is added to a solvent, the metal containing surface is exposed to, in an amount that the concentration of the corrosion inhibition composition in the solvent is in the range of 0.01% to 60% (w/w) of the total mass, more preferably in the range of 0.05% to 15% (w/w), most preferably in the range of 0.1% to 5% of the total mass.

In further embodiments, the recently described embodiments can be combined.

**Figures and Examples**

The present invention will now be further explained by the following non-limiting figures and examples.

In terms of the invention, the term "% (w/w)" means weight percent of the total mass of the composition.

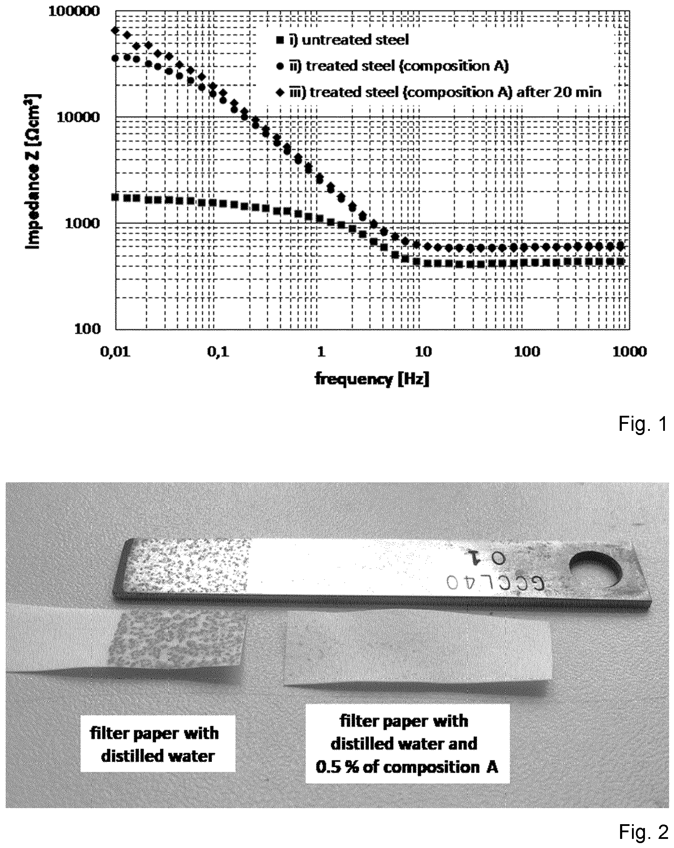

Fig 1 shows the inhibition efficiency of cast iron samples: the basis of the electrochemical impedance vs. frequency of i) untreated, ii) after 30 s of exposure of the mild steel sample to a solution of the composition (consisting of 0.5% (w/w) composition A and 95.5% (w/w) water) and subsequent drying of the sample, iii) after 30 s of exposure of the mild steel sample to a solution of the composition (consisting of 0.5% (w/w) composition A and 95.5% (w/w) water), 20 min contact to a neutral aqueous gel electrolyte subsequent and drying of the sample. Fig. 2 shows the visual appearance of a mild steel sample after application of wet filter paper, soaked with: distilled water (left), distilled water and 0.5% (w/w) of component A (right).

Composition A

Component A is sodium malate (Na malate).

The corrosion inhibition efficiency was investigated using metal coupons (Tab. 1).

**Tab. 1** Specification and densities of metal coupons (UNS: Unified Numbering System for metals and/or alloys. It specifies exactly the composition of the metal in question).

| UNS code | Trade name | Density (g/cm$^3$) |
|---|---|---|
| G10100 | C1010 Mild Steel | 7.87 |
| F12801 | Grey Cast Iron Type G-2 CL40 | 6.97 |

Example 1 - Electrochemical measurements

Electrochemical measurements were conducted to obtain polarization resistances ($R_P$) by means of electrochemical impedance spectroscopy (EIS) of a mild steel surface (treated without and with a solution of the corrosion inhibition composition consisting of 0.5% (w/w) composition A and 95.5% (w/w) water) in contact to a neutral water-based gel electrolyte (3% agar in water) mimicking wet film conditions. To conduct the EIS measurement a specific electrode-setup, consisting of a KCl saturated Ag/AgCl reference electrode (E = 197 mV vs. standard hydrogen electrode (SHE)) and a titanium-mixed-oxide mesh as a counter electrode, was connected on top of the gel electrolyte. The measurement was performed within a frequency range of 50 kHz to 0.01 Hz under potentiostatic conditions with an AC amplitude of 25 mV around the open circuit potential. A "PalmSens4 potentiostat" and the software "PSTrace5" was used to perform the EIS measurements. The $R_P$ value was extracted from the measured spectra by subtracting the high frequency impedance from the low frequency impedance (see ASTM G3 - 14(2019) Standard Practice for Conventions Applicable to Electrochemical Measurements in Corrosion Testing). The higher the $R_P$ value, the lower the corrosion rate or the metal loss.

For an evaluation of the protection capabilities of an additive orcorrosion inhibitor, the inhibition efficiency (IE) is calculated using formula 1

$$IE\ [\%] = 100 * R_{P1} * (1/R_{P1} - 1/R_{P2}) \qquad (1),$$

wherein $R_{P1}$ is the polarization resistance of the non-treated sample and $R_{P2}$ the polarization resistance of the specific treated sample.

Electrolyte

To mimic flash corrosion conditions (water film on the surface) on mild steel a neutral water-based gel electrolyte was used, consisting of 3% melted agar in water. It was attached on the steel surface and connected with the reference and counter electrode for the measurement.

Specimen

The tested metallic sample is a commercially obtained coupon of mild steel (C1010) (see Tab. 1). Before testing, the metallic sample is ground with abrasive paper grit 600, rinsed and dried in air. Afterwards the metallic sample is treated for 30 s with a solution of the composition consisting of 0.5% (w/w) composition A and 95.5% (w/w) water and dried in air. The actual value of the exposed surface area in the electrochemical experiment is 1 cm$^2$.

Electrochemical equipment

For the performance testing, a specific electrode setup was used, consisting of a counter electrode made of a titanium-mixed-oxide mesh and a KCl-saturated Ag/AgCl reference electrode with an electrode potential of E = 197 mV vs. standard hydrogen electrode (SHE). A PalmSens4 potentiostat and the software PSTrace5 was used to perform the EIS measurements.

**Tab. 2** Results for corrosion inhibition efficiency.

| experiment | | | mild steel |
|---|---|---|---|
| (i) | $R_P$ [k$\Omega$cm$^2$]<br>no treatment, immediate EIS measurement | | 1.73 |
| (ii) | $R_P$ [k$\Omega$cm$^2$]<br>30 s treatment, immediate EIS measurement | | 15.42 |
| | **IE [%]** | | **88.8** |
| (iii) | $R_P$ [k$\Omega$cm$^2$]<br>30 s treatment, EIS measurement after 20 min of contact with a neutral water-based gel-electrolyte | | 33.33 |
| | **IE [%]** | | **94.8** |

Fig. 1 shows the results of the electrochemical impedance vs. frequency for three different conditions, experiment i) untreated steel, experiment ii) treated steel (composition A for 30 s) with measurement immediately after treatment and experiment iii) treated steel (composition A for 30 s) and measured after 20 min of immersion in neutral water-based gel-electrolyte.

Example 2 - Immersion Testing

Cast iron samples (see Tab. 1) were freshly ground (grain size 600) and dried in air. Filter paper soaked in distilled water and a solution of the corrosion inhibition composition consisting of 0.5% (w/w) composition A and 95.5% (w/w) water was placed on the samples. After the filter paper has dried, the protective effect of composition A can be visually recognized by the fact that no or only very slight signs of rust formation are visible on the filter paper and on the sample, whereas in the absence of composition A very strong signs of flash corrosion are visible (see Fig. 2).

Example 3 - Comparison with reference corrosion inhibition composition

Steel specimens (mild steel, DC06 according to EN 10130, Gardobond C®) were activated by wet abrasion with a plastic cleaning sponge and subsequent rapid drying in warm air. Filter paper (Whatman Grade 1, d = 15 mm) soaked in different samples was placed on the samples: distilled water, an aqueous solution of composition A, an aqueous solution of sodium nitrite and an aqueous solution of composition A and sodium nitrite (see Tab. 3). After the filter paper has dried (1 h), the protective effect can be determined by scanning the filter paper and analysis using digital image analysis (trainable Weka Segmentation) of the rusty brown colouring (see Tab. 3, corroded area). The protection rating according to DIN EN ISO 10289 is calculated from the corroded area.

Tab. 3 Results for protection rating (composition A = sodium malate = Na malate, sodium nitrite = $NaNO_2$).

| sample | Corroded area [%] | protection rating according to DIN EN ISO 10289 |
|---|---|---|
| water | 62.9 | 0/10 |
| 0.25% $NaNO_2$ in water | 0 | 10/10 |
| 0.5% $NaNO_2$ in water | 0 | 10/10 |
| Na malate + $NaNO_2$ in water (each 0.5%) | 0 | 10/10 |
| Na malate + $NaNO_2$ in water (each 0.25%) | 0 | 10/10 |
| 0.25% Na malate in water | 0 | 10/10 |
| 0.5% Na malate in water | 0 | 10/10 |

**Claims**

1. Use of at least one malate, wherein the cation of the malate is selected from the group comprising Li, Na, K, Cs, Fr, Rb, Ca and Mg as a corrosion inhibition composition.

2. Use of a liquid formulation consisting of a corrosion inhibition composition consisting of at least one malate as defined in claim 1, and a liquid medium, selected from water, at least one organic solvent or a mixture thereof, for inhibition of corrosion of metals and/or metal containing surfaces.

3. Use of a liquid formulation according to claim 2, wherein the concentration of the corrosion inhibition composition is in the range of 0.01% to 60 % (w/w) of the total liquid formulation.

4. Use of a solid formulation consisting of a corrosion inhibition composition consisting of at least one malate as defined in claim 1, and at least one further component, wherein the at least one further component is selected from carrier materials, complexing agents, softener and surfactants, for inhibition of corrosion of metals and/or metal containing surfaces.

5. Use of a solid formulation according to claim 4, wherein the concentration of the corrosion inhibition composition in the solid formulation is in the range 0.05% to 99,9 % (w/w) of the total solid formulation.

6. Use of a corrosion inhibition composition according to claim 1, the liquid formulation according to claim 2 or 3 and/or the solid formulation according to claim 4 or 5, wherein the cation of the malate is Na and/or K.

7. Use of the corrosion inhibition composition according to claim 1, the liquid formulation according to claim 2 or 3 and/or the solid formulation according to claim 4 or 5, for inhibition of corrosion of metals and/or metal containing surfaces, wherein the metal and/or metal containing surface comprises a metal selected from the group comprising steel, stainless steel, carbon steel, cast iron, iron, magnesium, cast magnesium, aluminum, cast aluminum, copper, zinc, brass, combinations and alloys thereof.

8. Use of a corrosion inhibition composition according to claim 1, the liquid formulation according to claim 2 or 3 and/or the solid formulation according to claim 4 or 5 in coatings, preferably in paintings or functional coatings.

9. Use of a corrosion inhibition composition according to claim 1, the liquid formulation according to claim 2 or 3 and/or the solid formulation according to claim 4 or 5 for protection of metals and/or metallic surfaces from corrosion in liquids containing water.

**10.** Method for inhibition of corrosion of metals and/or metal containing surfaces, comprising the steps

a) Providing

- i) a corrosion inhibition composition consisting of at least one malate, wherein the cation of the malate is selected from the group comprising Li, Na, K, Cs, Fr, Rb, Ca and Mg,
and/or
- ii) a liquid corrosion inhibition formulation consisting of at least one malate, wherein the cation of the malate is selected from the group comprising Li, Na, K, Cs, Fr, Rb, Ca and Mg, and at least one liquid medium, selected from water, at least one organic solvent or a mixture thereof,
and/or
- iii) a solid corrosion inhibition formulation consisting of at least one malate, wherein the cation of the malate is selected from the group comprising Li, Na, K, Cs, Fr, Rb, Ca and Mg, and at least one solid component, wherein the at least one solid component is selected from carrier materials, complexing agents, softeners and surfactants,

b) Exposing a metal and/or metal containing surface
to the liquid corrosion inhibition formulation or to a corrosion inhibition solution, wherein the corrosion inhibition solution is produced by addition of the corrosion inhibition composition and/or a liquid and/or a solid corrosion inhibition formulation to a solvent.

**11.** Method according to claim 10, wherein the cation of the salt is Na or K.

**12.** Method according to claim 10 or 11, wherein the solvent in b) is water, at least one organic solvent or a mixture thereof.

**13.** Method according to any of the claims 10 to 12, comprising the additional step c) Drying of the metal and/or metal containing surface.

**14.** Method according to any of the claims 10 to 13, wherein the corrosion inhibition solution has a concentration of the corrosion inhibition composition in the range of 0.01% to 60% (w/w) of the total corrosion inhibition solution.

**15.** Method according to any of claims 10 to 14, wherein the exposure in step b) is selected from dipping the metal containing surface into the corrosion inhibition solution and/or spraying and/or brushing the corrosion inhibition solution on the metal containing surface.

**Patentansprüche**

**1.** Verwendung mindestens eines Malats, wobei das Kation des Malats ausgewählt ist aus der Gruppe, umfassend Li, Na, K, Cs, Fr, Rb, Ca und Mg, als korrosionshemmende Zusammensetzung.

**2.** Verwendung einer flüssigen Formulierung, bestehend aus einer korrosionshemmenden Zusammensetzung, bestehend aus mindestens einem Malat, wie in Anspruch 1 definiert, und einem flüssigen Medium, ausgewählt aus Wasser, mindestens einem organischen Lösungsmittel oder einer Mischung davon, zur Hemmung der Korrosion von Metallen und/oder metallhaltigen Oberflächen.

**3.** Verwendung einer flüssigen Formulierung nach Anspruch 2, wobei die Konzentration der korrosionshemmenden Zusammensetzung im Bereich von 0,01 % bis 60 % (w/w) der gesamten flüssigen Formulierung liegt.

**4.** Verwendung einer festen Formulierung, bestehend aus einer korrosionshemmenden Zusammensetzung, bestehend aus mindestens einem Malat, wie in Anspruch 1 definiert, und mindestens einer weiteren Komponente, wobei die mindestens eine weitere Komponente aus Trägermaterialien, Komplexbildnern, Weichmachern und Tensiden ausgewählt ist, zur Hemmung der Korrosion von Metallen und/oder metallhaltigen Oberflächen.

**5.** Verwendung einer festen Formulierung nach Anspruch 4, wobei die Konzentration der korrosionshemmenden Zusammensetzung in der festen Formulierung im Bereich von 0,05 % bis 99,9 % (w/w) der gesamten festen Formulierung liegt.

6. Verwendung einer korrosionshemmenden Zusammensetzung nach Anspruch 1, der flüssigen Formulierung nach Anspruch 2 oder 3 und/oder der festen Formulierung nach Anspruch 4 oder 5, wobei das Kation des Malats Na und/oder K ist.

7. Verwendung einer korrosionshemmenden Zusammensetzung nach Anspruch 1, der flüssigen Formulierung nach Anspruch 2 oder 3 und/oder der festen Formulierung nach Anspruch 4 oder 5 zur Hemmung der Korrosion von Metallen und/oder metallhaltigen Oberflächen, wobei das Metall und/oder die metallhaltige Oberfläche ein Metall umfasst, ausgewählt aus der Gruppe umfassend Stahl, rostfreien Stahl, Kohlenstoffstahl, Gusseisen, Eisen, Magnesium, Magnesiumguss, Aluminium, Aluminiumguss, Kupfer, Zink, Messing, Kombinationen und Legierungen davon.

8. Verwendung einer korrosionshemmenden Zusammensetzung nach Anspruch 1, der flüssigen Formulierung nach Anspruch 2 oder 3 und/oder der festen Formulierung nach Anspruch 4 oder 5 in Beschichtungen, bevorzugt in Anstrichen oder Funktionsbeschichtungen.

9. Verwendung einer korrosionshemmenden Zusammensetzung nach Anspruch 1, der flüssigen Formulierung nach Anspruch 2 oder 3 und/oder der festen Formulierung nach Anspruch 4 oder 5 zum Schutz von Metallen und/oder metallischen Oberflächen vor Korrosion in wasserhaltigen Flüssigkeiten.

10. Verfahren zur Inhibierung der Korrosion von Metallen und/oder metallhaltigen Oberflächen, umfassend die Schritte

  a) Bereitstellen

  - i) einer korrosionshemmenden Zusammensetzung, bestehend aus mindestens einem Malat, wobei das Kation des Malats ausgewählt ist aus der Gruppe, umfassend Li, Na, K, Cs, Fr, Rb, Ca und Mg, und/oder
  - ii) einer flüssigen korrosionshemmenden Formulierung, bestehend aus mindestens einem Malat, wobei das Kation des Malats ausgewählt ist aus der Gruppe, umfassend Li, Na, K, Cs, Fr, Rb, Ca und Mg, und mindestens einem flüssigen Medium, ausgewählt aus Wasser, mindestens einem organischen Lösungsmittel oder einem Gemisch davon, und/oder
  - iii) einer festen korrosionshemmenden Formulierung, bestehend aus mindestens einem Malat, wobei das Kation des Malats ausgewählt ist aus der Gruppe, umfassend Li, Na, K, Cs, Fr, Rb, Ca und Mg, und mindestens einer festen Komponente, wobei die mindestens eine feste Komponente ausgewählt ist aus Trägermaterialien, Komplexbildnern, Weichmachern und Tensiden,

  b) Inkontaktbringen eines Metalls und/oder einer metallhaltigen Oberfläche mit der flüssigen korrosionshemmenden Formulierung oder mit einer korrosionshemmenden Lösung, wobei die korrosionshemmende Lösung durch Zugabe der korrosionshemmenden Zusammensetzung und/oder einer flüssigen und/oder einer festen korrosionshemmenden Formulierung zu einem Lösungsmittel hergestellt wird.

11. Verfahren nach Anspruch 10, wobei das Kation des Salzes Na oder K ist.

12. Verfahren nach Anspruch 10 oder 11, wobei das Lösungsmittel in b) Wasser, mindestens ein organisches Lösungsmittel oder eine Mischung davon ist.

13. Verfahren nach einem der Ansprüche 10 bis 12, umfassend den zusätzlichen Schritt c) Trocknen des Metalls und/oder der metallhaltigen Oberfläche.

14. Verfahren nach einem der Ansprüche 10 bis 13, wobei die korrosionshemmende Lösung eine Konzentration der korrosionshemmenden Zusammensetzung im Bereich von 0,01% bis 60% (w/w) der gesamten korrosionshemmenden Lösung aufweist.

15. Verfahren nach einem der Ansprüche 10 bis 14, wobei das Inkontaktbringen in Schritt b) ausgewählt ist aus dem Eintauchen der metallhaltigen Oberfläche in die korrosionshemmende Lösung und/oder dem Sprühen und/oder Streichen der korrosionshemmenden Lösung auf die metallhaltige Oberfläche.

**Revendications**

1. Utilisation d'au moins un malate, dans lequel le cation du malate est choisi parmi le groupe comprenant Li, Na, K, Cs, Fr, Rb, Ca et Mg, comme composition d'inhibition de la corrosion.

2. Utilisation d'une formulation liquide constituée d'une composition d'inhibition de la corrosion constituée d'au moins un malate tel que défini dans la revendication 1, et d'un milieu liquide, choisi parmi l'eau, au moins un solvant organique ou un mélange de ceux-ci, pour l'inhibition de la corrosion de métaux et/ou de surfaces contenant des métaux.

3. Utilisation d'une formulation liquide selon la revendication 2, dans laquelle la concentration de la composition d'inhibition de la corrosion est dans la plage de 0,01 % à 60 % (p/p) de la formulation liquide totale.

4. Utilisation d'une formulation solide constituée d'une composition d'inhibition de la corrosion constituée d'au moins un malate tel que défini dans la revendication 1, et d'au moins un composant supplémentaire, dans laquelle l'au moins un composant supplémentaire est choisi parmi des matériaux porteurs, agents complexants, adoucisseur et tensioactifs, pour l'inhibition de la corrosion de métaux et/ou de surfaces contenant des métaux.

5. Utilisation d'une formulation solide selon la revendication 4, dans laquelle la concentration de la composition d'inhibition de la corrosion dans la formulation solide est dans la plage de 0,05 % à 99,9 % (p/p) de la formulation solide totale.

6. Utilisation d'une composition d'inhibition de la corrosion selon la revendication 1, de la formulation liquide selon la revendication 2 ou 3 et/ou de la formulation solide selon la revendication 4 ou 5, dans laquelle le cation du malate est Na et/ou K.

7. Utilisation de la composition d'inhibition de la corrosion selon la revendication 1, de la formulation liquide selon la revendication 2 ou 3 et/ou de la formulation solide selon la revendication 4 ou 5, pour l'inhibition de la corrosion de métaux et/ou de surfaces contenant des métaux, dans laquelle le métal et/ou la surface contenant des métaux comprend un métal choisi parmi le groupe comprenant l'acier, acier inoxydable, acier au carbone, fonte, fer, magnésium, magnésium coulé, aluminium, aluminium coulé, cuivre, zinc, laiton, les combinaisons et alliages de ces métaux.

8. Utilisation d'une composition d'inhibition de la corrosion selon la revendication 1, de la formulation liquide selon la revendication 2 ou 3 et/ou de la formulation solide selon la revendication 4 ou 5 dans des revêtements, de préférence dans des peintures ou des revêtements fonctionnels.

9. Utilisation d'une composition d'inhibition de la corrosion selon la revendication 1, de la formulation liquide selon la revendication 2 ou 3 et/ou de la formulation solide selon la revendication 4 ou 5 pour la protection de métaux et/ou de surfaces métalliques contre la corrosion dans des liquides contenant de l'eau.

10. Procédé d'inhibition de la corrosion de métaux et/ou surfaces contenant des métaux, comprenant les étapes de

    a) La fourniture

    - i) d'une composition d'inhibition de la corrosion constituée d'au moins un malate, dans laquelle le cation du malate est choisi parmi le groupe comprenant Li, Na, K, Cs, Fr, Rb, Ca et Mg,
    et/ou
    - ii) d'une formulation liquide d'inhibition de la corrosion constituée d'au moins un malate, dans laquelle le cation du malate est choisi parmi le groupe comprenant Li, Na, K, Cs, Fr, Rb, Ca et Mg, et d'au moins un milieu liquide, choisi parmi l'eau, au moins un solvant organique ou un mélange de ceux-ci,
    et/ou
    - iii) d'une formulation d'inhibition de la corrosion solide constituée d'au moins un malate, dans laquelle le cation du malate est choisi parmi le groupe comprenant Li, Na, K, Cs, Fr, Rb, Ca et Mg, et d'au moins un composant solide, dans lequel l'au moins un composant solide est choisi parmi des matériaux porteurs, des agents complexants, des adoucisseurs et des tensioactifs,

    b) L'exposition d'un métal et/ou d'une surface contenant du métal

à la formulation liquide d'inhibition de la corrosion ou à une solution d'inhibition de la corrosion, dans laquelle la solution d'inhibition de la corrosion est produite par addition de la composition d'inhibition de la corrosion et/ou d'une formulation liquide et/ou solide d'inhibition de la corrosion à un solvant.

11. Procédé selon la revendication 10, dans lequel le cation du sel est Na ou K.

12. Procédé selon la revendication 10 ou 11, dans lequel le solvant en b) est de l'eau, au moins un solvant organique ou un mélange de ceux-ci.

13. Procédé selon l'une quelconque des revendications 10 à 12, comprenant l'étape supplémentaire
c) Du séchage du métal et/ou de la surface contenant du métal.

14. Procédé selon l'une quelconque des revendications 10 à 13, dans lequel la solution d'inhibition de la corrosion a une concentration de composition d'inhibition de la corrosion comprise dans la plage de 0,01 % à 60 % (p/p) de la solution totale d'inhibition de la corrosion.

15. Procédé selon l'une quelconque des revendications 10 à 14, dans lequel l'exposition à l'étape b) est choisie parmi le trempage de la surface contenant le métal dans la solution d'inhibition de la corrosion et/ou la pulvérisation et/ou le brossage de la solution d'inhibition de la corrosion sur la surface contenant le métal.

Fig. 1

filter paper with
distilled water

filter paper with
distilled water and
0.5 % of composition A

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0544345 A1
- US 20080257202 A1
- US 7306663 B2
- US 20150053111 A1
- US 20040159823 A1
- US 2173689 A
- CA 398718 A
- CN 109065912 A
- CN 108425123 A
- JP 2004196901 A
- JP 2009256735 A
- WO 2009027857 A1
- WO 9716521 A1